# EUROPEAN PATENT SPECIFICATION

(11) **EP 0 542 537 B1**
(45) Date of publication and mention of the grant of the patent: **17.09.1997**
(21) Application number: 92310323.8
(22) Date of filing: 12.11.1992
(51) Int. Cl.: H04N 7/14

(54) **Teleconference system**
Telekonferenzsystem
Système de téléconférence

(30) Priority: 13.11.1991 JP 297364/91
(43) Date of publication of application: 19.05.1993
(73) Proprietor: SONY CORPORATION, Tokyo 141 (JP)
(72) Inventor: Ishikawa, Tomikazu, Shinagawa-ku, Tokyo (JP); Takano, Masayuki, c/o Sony Corporation, Shinagawa-ku, Tokyo (JP); Hatake, Shohei, c/o Sony Corporation, Shinagawa-ku, Tokyo (JP)
(74) Representative: Nicholls, Michael John

(56) References cited:
- EP-A- 0 314 122
- US-A- 4 924 311
- PATENT ABSTRACTS OF JAPAN vol. 14, no. 234 (E-929)17 May 1990 & JP-A-20 60 388
- PATENT ABSTRACTS OF JAPAN vol. 13, no. 503 (E-844)13 November 1989 & JP-A-12 02 086
- TRENDS IN TELECOMMUNICATIONS vol. 2, no. 1, 1986, NETHERLANDS pages 13 - 27 J. SPEIDEL 'A TERMINAL FOR TRANSMISSION OF FULL-MOTION PICTURES AND GRAPHICS, HIGH-QUALITY SPEECH AND DATA WITH 2 MBIT/S FOR VIDEO-TELECONFERENCING AND VISUAL TELEPHONY'

## Description

The present invention relates to a teleconference system that includes a wide variety of television monitors and video cameras.

Teleconference systems have been proposed so far, see for example Japanese Laid-Open Patent Publication JP-A- 63065789 or "Trends in Telecommunications" Vol. 2, No. 1, 1986, Netherlands, pages 13-27, or US-A-4,924,311.

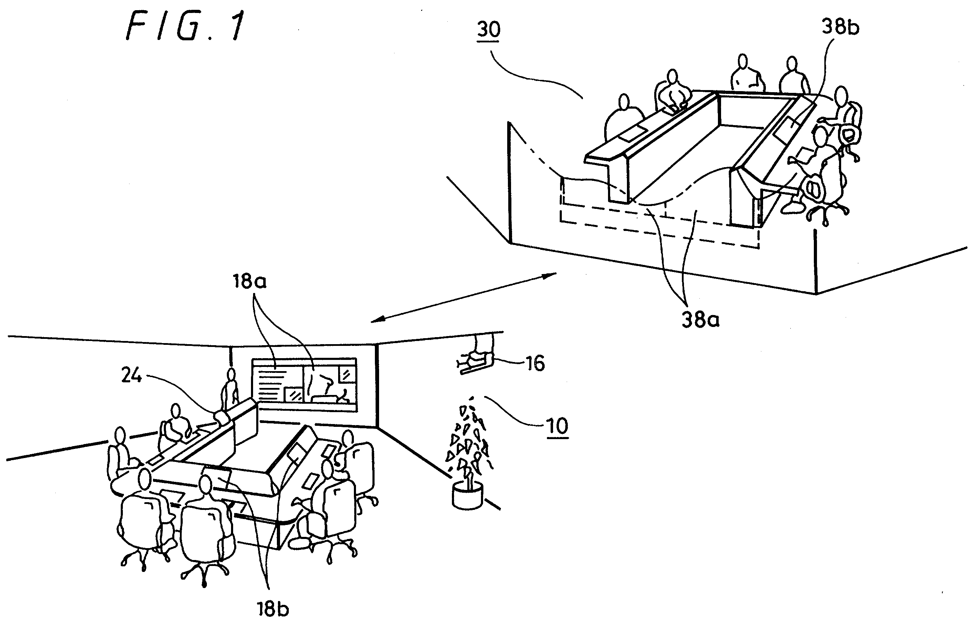

FIG. 1 of the accompanying drawings schematically shows the state that a teleconference system is in use. As shown in FIG. 1, this kind of teleconference system includes television monitors 18a, 38a which are respectively installed in first and second conference rooms 10, 30 to display situations of one conference room on the television monitor of another conference room so that a conference can be held between the two conference rooms 10, 30. Generally, data such as video data are transmitted between the two conference rooms 10, 30 via a telephone network line such as an ISDN (integrated services digital network) or the like. Therefore, an amount of data to be transmitted is limited by the telephone network line and an image such as an ordinary television broadcasting image having a high resolution cannot be transmitted in a real time fashion. It is therefore customary that the video signal is transmitted in the compressed form.

Although an image displayed on the receiving side by the conventional teleconference system is deteriorated in resolution and cannot satisfactorily follow a moving image that is moving a high speed, the deterioration of resolution is not so important inasmuch as the teleconference system is utilized in the state that only the state of one conference room is displayed on the television monitor of the other conference room.

When an electronic conference is held according to the conventional teleconference system, it is customary that not only the state of one conference room is displayed on the television monitor of the other conference room but also a picture of a previously-prepared document or the like is displayed on the television monitor of the other conference room. According to the conventional teleconference system, not only the conference can be held but also a variety of presentations can be made smoothly,

When various documents are displayed on the television monitor as described above, a deterioration of resolution becomes a serious problem. That is, when the document or the like is transmitted to and displayed on the television monitor in the other conference room, the deterioration of resolution becomes a serious problem because a displayed picture must have a resolution sufficient so that characters or the like written on the document can be visually confirmed. When a video signal reproduced from a video tape is transmitted to the receiving side, if the video signal is compressed and then transmitted according to the conventional teleconference system, then a picture of an object that is being moved at high speed is deteriorated considerably in resolution.

Further, such presentation needs a cumbersome operation. That is, various video informations must be sequentially transmitted to the receiving side in accordance with the progress of the conference. Therefore, the conventional teleconference system needs an expert who operates the transmitting apparatus in addition to the presenter.

It is an object of the present invention to provide an improved teleconference system in which the aforesaid shortcomings and disadvantages of the prior art can be eliminated.

More specifically, it is an object of the present invention to provide a teleconference system in which a presentation or the like can be carried out by simple operation.

As an aspect of the present invention, there is provided a teleconference system comprising a video transmitting apparatus and a video receiving apparatus between which a video signal is transmitted, said video receiving apparatus comprising:
a) display means for displaying a video information;
b) video memory means for storing therein a plurality of items of video information transmitted from said video transmitting apparatus;
characterised by:-
c) control information memory means for storing therein display control information representative of an order in which said plurality of items of video information transmitted from said video transmitting apparatus and stored in said video memory means are to be displayed so as to form a desired scenario; and
d) control means responsive to a display switching information transmitted from said video transmitting apparatus to read said display control information stored in said control information memory means and sequentially reading said video information from said video memory means in accordance with the display order represented by the read-out display control information and supplying the same to said display means whrereby subsequent items of video information are used to form subsequent images on said display in accordance with said desired scenario.

The invention also provides a terminal system for use in such a system and comprising the parts necessary for connection to the communication network.

A better understanding of the present invention can be gained from a consideration of the following detailed description of an illustrative embodiment of the present invention, in conjunction with the figures of the accompanying drawings, wherein:
FIG. 1 is a pictorial representation used to explain the state that a teleconference system is in use;
FIG. 2 is a block diagram showing a teleconference system according to an embodiment of the present invention;
FIG. 3 is a perspective view showing an example of a console used in the teleconference system of the present invention shown in FIG. 2;
FIG. 4 is a diagram showing contents stored in a scenario storage memory used in the teleconference system of the present invention shown in FIG. 2;
FIG. 5 is a diagram of a format used to explain the state that image data is transmitted in the teleconference system of the present invention shown in FIG. 2; and
FIG. 6 is a flowchart to which references will be made in explaining operation of the teleconference system of the present invention shown in FIG. 2.

A teleconference system according to an embodiment of the present invention will now be described with reference to the drawings.

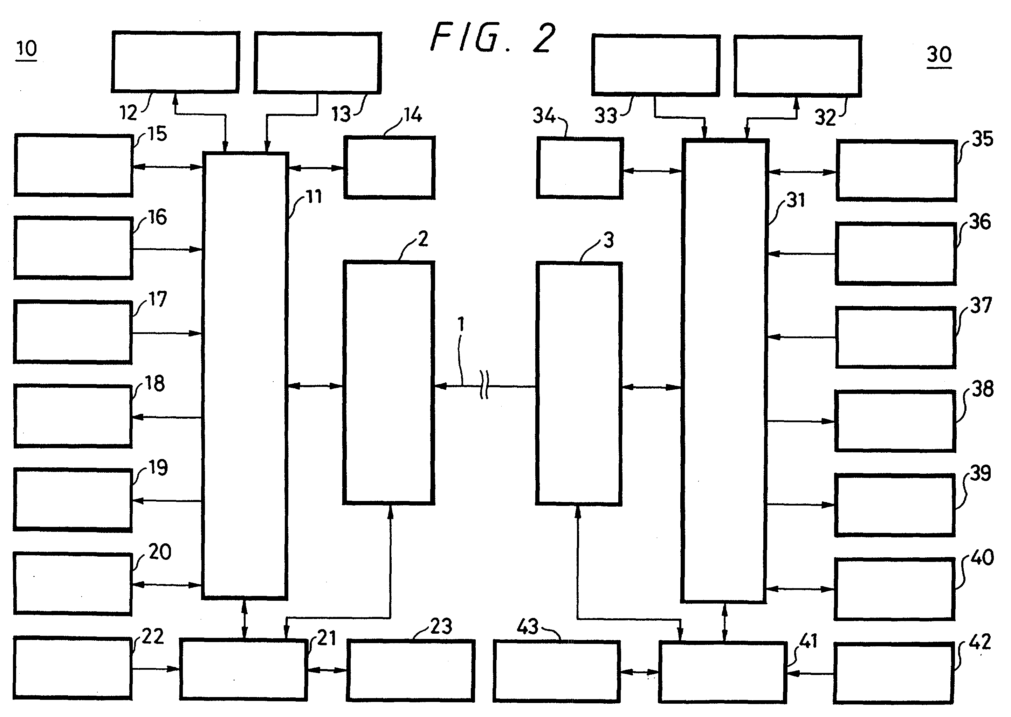

According to this embodiment, a teleconference system is arranged as shown in FIG. 2 of the accompanying drawings.

In FIG. 2, reference numeral 10 depicts a first conference room and 30 a second conference room. The first and second conference rooms 10, 30 are connected through a telephone network line 1 such as the ISDN or the like. The first and second conference rooms 10, 30 are fundamentally the same in arrangement and therefore the first and second conference room 10, 30 will be described below at the same time.

As shown in FIG. 2, in the two conference rooms 10, 30, transmitting and receiving apparatus 2, 3 are connected to the telephone network line 1 and system controllers 11, 31 are connected to the transmitting and receiving apparatus 2, 3. The system controllers 11, 31 are adapted to control a variety of operations, such as transmission, reception and reproduction of video and audio signals, etc. in the first and second conference rooms 10, 30. Touch-sensitive panels 12, 32 and simple commanders 13, 33 are connected to the respective system controllers 11, 31, whereby various settings are carried out by operating the touch-sensitive panels 12, 32. A simple operation is carried out by operating the simple commanders 13, 33. Scenario storage memories 14, 34 are connected to the system controllers 11, 31 and can store therein information concerning scenario such as the display order set on the basis of the operation of the touch-sensitive panels 12, 32 and information concerning scenario transmitted thereto from other conference room through the telephone network line 1.

Various video and audio equipments are connected to the system controllers 11, 31 in the respective conference rooms 10, 30. More specifically, to the system controllers 11, 31, there are connected still image file apparatus 15, 35 in which video floppy discs capable of recording therein a video signal of several 10s of frames as a still picture are loaded, video cameras 16, 36 for taking a picture of the inside of the conference room, microphones 17, 37 for picking up a sound within the conference rooms 10, 30. television monitors 18, 38 for displaying a variety of pictures, speakers 19, 39 for emanating a sound and video tape recorders (VTRs) 20, 40 into which video tape cassettes are loaded. A plurality of equipments such as television monitors 18, 38 and so on are installed in the first and second conference rooms 10, 30. Video and audio signals from respective video equipments can be transmitted from one to the other conference room under the control of the system controllers 11, 31. Upon transmission, the video and audio signals may be compressed with a large compression ratio and transmitted in a real time fashion. Alternatively, a video signal or the like that was prepared in advance is not compressed and then transmitted during a long period of time, as will be described later on.

Document processors 21, 41 are respectively connected to the system controllers 11, 31. Processing such as display, recording and transmission of documents is controlled by the document processors 21, 41. The document processors 21, 41 are connected with image scanners 22, 42 for reading out documents and magneto-optical disc apparatus 23, 43 serving as document files to store read-out data and document data to be transmitted as character code data and graphic data. The document processors 21, 41 are also connected directly to the transmitting and receiving apparatus 2, 3 so that data from the document processors 21, 41, can be directly transmitted to the other conference room via the telephone network line 1. Character code data and graphic data from the magneto-optical disc apparatus 23, 43 are converted by the document processors 21, 41 into display video data. The display video data are then supplied to the system controllers 11, 31 and document data are displayed on the picture screens of the television monitors 18, 38 connected to the system controllers 11, 31 as pictures.

These video equipments and magneto-optical disc apparatus can reproduce data such as video signals or the like from recording media loaded onto respective equipments and record corresponding data supplied thereto from the other conference room via the telephone network line 1 on the respective corresponding recording media. The above recording can be carried out under the control of the system controllers 11, 31 and the document processors 21, 41. Also, this recording can be carried out by operating the touch-sensitive panels 12, 32 of the first and second conference rooms 10, 30 and also on the basis of control data transmitted from the other conference room via the telephone network line 1.

Practical examples of the conference rooms will be described with also reference to FIG. 1.

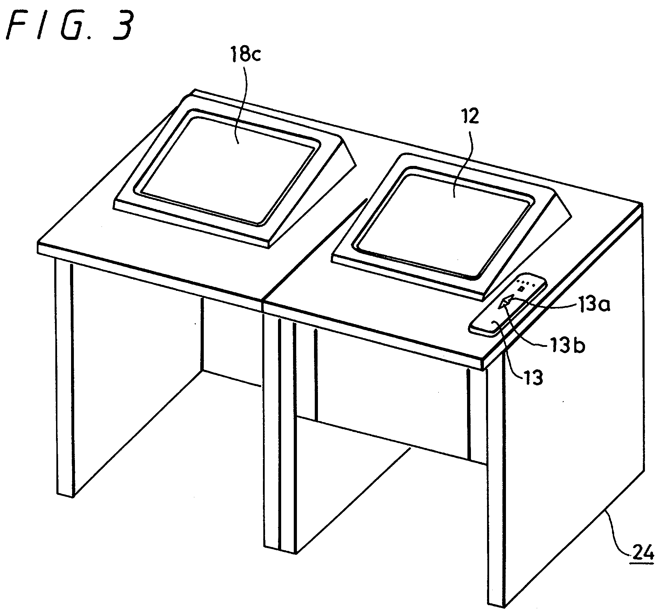

As shown in FIG. 1, a plurality of large television monitors 18a are installed on the wall of the first conference room 10, for example, and a plurality of small television monitors 18b are installed on the table. There is provided a console 24 on which, as shown in FIG. 3 of the accompanying drawings, there are disposed the touch-sensitive panel 12 and the simple commander 13. A television monitor 18c also is installed on the console 24. The touch-sensitive panel 12 is energized to make the operation possible in accordance with the operation displayed on the picture screen thereof when each portion displayed on the picture screen is touched by the user. The simple commander 13 includes a forward key 13a and a backward key 13b, whereby the direction in which a picture displayed is advanced, i.e., the forward direction or the reverse direction of the picture to be displayed can be changed-over in accordance with the scenario that was previously set. According to the thus arranged console 24, the user can instruct'various operations such as the transmission of video signal or the like by operating the touch-sensitive panel 12 and the simple commander 13 while visually confirming the picture displayed on the television monitor 18c.

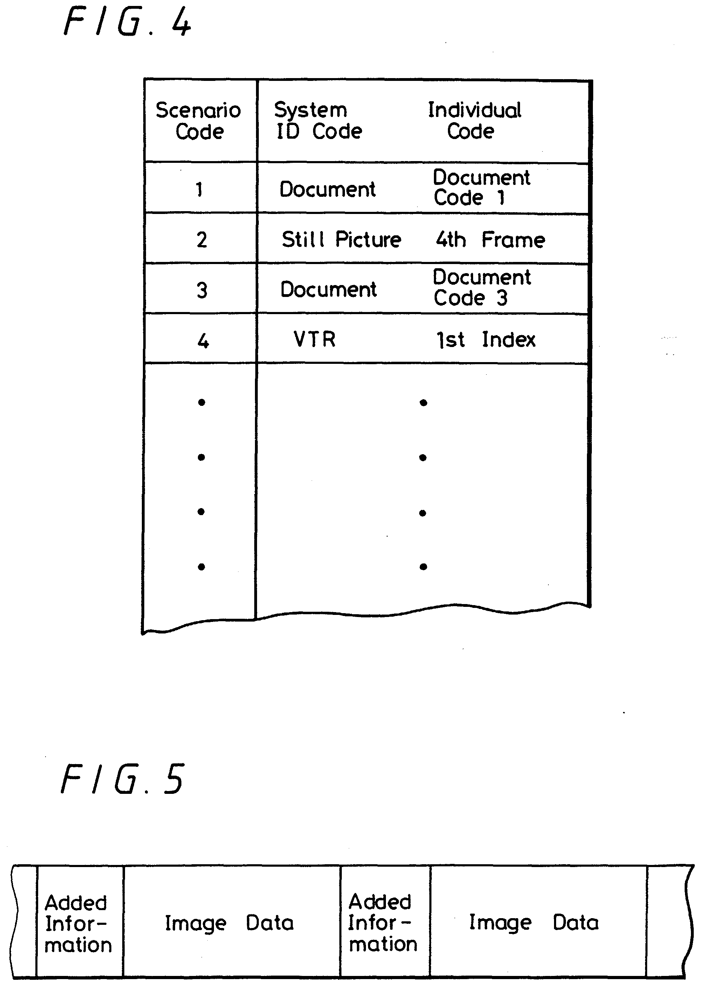

An example that a conference is to be held by utilizing the above teleconference system will be described with reference to FIG. 4 and the sheets of drawings which follow.

Let it be assumed herein that pictures are displayed on the respective television monitors 18 (18a, 18b, 18c) of the first conference room 10 and the respective television monitors 38 (38a, 38b) of the second conference room 30 by operating the console 24 in the first conference room 10 in order to make some presentations.

In this embodiment, a so-called scenario must be set before the conference is started, i.e., pictures necessary for presentation and the order of pictures to be displayed are set in the form of the scenario. Pictures that can be set might be still pictures recorded on the video floppy disc set on the still image file apparatus 15, pictures (moving pictures) recorded on the video tape set on the VTR 20 and documents recorded by the magneto-optical disc apparatus 23. According to this embodiment, the still pictures recorded on the video floppy disc can be individually designated by frame codes, the moving pictures recorded on the video tape can be individually designated by index codes, and the documents recorded on the magneto-optical disc can be individually designated by document codes. As the scenario, pictures to be displayed can be specified by designating the ID (identification) code of the system that reproduces a corresponding picture and the respective codes.

Let it now be assumed that a document of document code 1 recorded on the magneto-optical disc, a still picture of frame code 4 recorded on the video floppy disc, a document of document code 3 recorded on the magneto-optical disc and a moving picture of index code 4 recorded on the video tape, ... are displayed, in that order. At that time, this scenario (i.e., display order, system ID code and data code) is stored in the scenario storage memory 14 that is connected to the system controller 11 of the first conference room 10 by operating the touch-sensitive panel 12 of the console 24. FIG. 4 of the accompanying drawings shows the state that respective data are stored in the memory 14. As shown in FIG. 4, the memory 14 includes storage areas in which system ID code and data codes are stored for every scenario code (display order). Therefore, the respective data are stored in the memory 14 in the above-mentioned sequential order.

After the setting of the scenario is finished, corresponding image data or document data recorded on recording media loaded onto respective equipments (systems) are read out therefrom under the control of the system controller 11 and the document processor 21 and then transmitted to the second conference room 30 via the telephone network line 1. If the image data or document data is recorded as analog data, then such analog data is converted into digital data and then transmitted. At that time, image data read-out from respective video equipments are not compressed (or compressed with a relatively small compression ratio) and then transmitted, which unavoidably needs a relatively long transmission time.

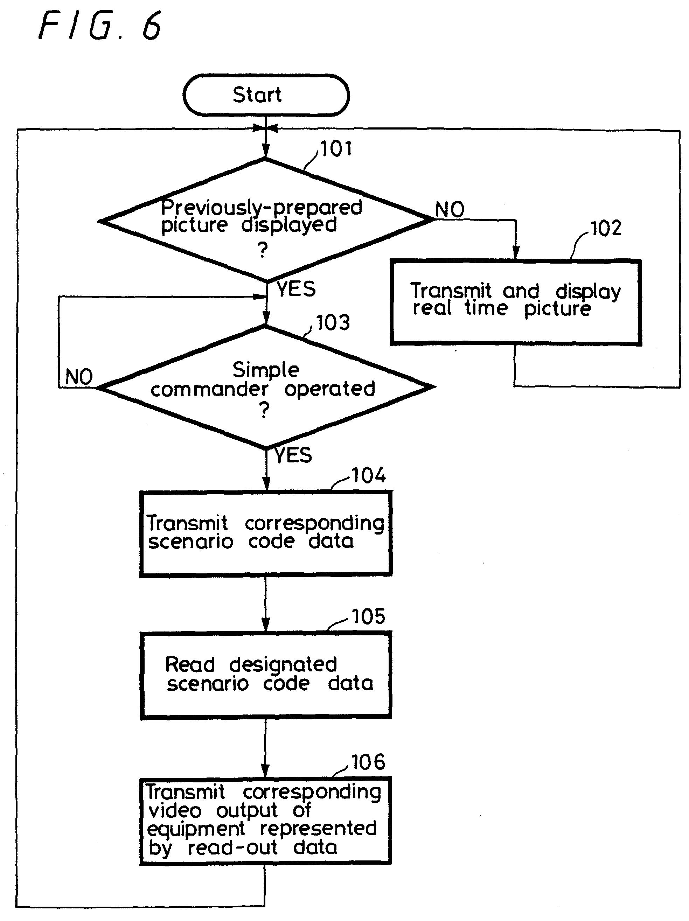

FIG. 5 of the accompanying drawings shows a format of transmission data. As shown in FIG. 5, data is transmitted in the form of a frame structure of one frame (this term of "frame" is not related to "frame of video signal" at all) wherein data such as the system ID code, the individual code and the scenario code are added to the image data (including the document data) of one unit.

When image data transmitted from the first conference room 10 is received by the second conference room 30, the received image data is recorded on the recording medium loaded on the equipment designated by the added data under the control of the system controller 31 and the document processor 41. Data concerning the scenario such as the system ID code, the individual code and the scenario code represented by the data added to the image data are stored in the scenario storage memory 34 connected to the system controller 31. Therefore, when the transmission of all image data is finished, the same data as those stored in the scenario storage memory 14 in the first conference room 10 are stored in the scenario storage memory 34 in the second conference room 30.

The prior preparation is finished after the image data or the like was transmitted to the second conference room 30.

A controlled state that the conference is held by utilizing the pictures thus prepared will be described with reference to a flowchart forming FIG. 6. In this embodiment, the pictures displayed in the two conference rooms 10, 30 are switched under the control of the first conference room 10.

Referring to FIG. 6 of the accompanying drawings, following the Start of operation, it is determined in decision step 101 whether the previously-prepared picture should be displayed or a real time picture taken by the video camera or the like should be displayed. The previously-prepared picture and the real time picture are selected by utilizing the touch-sensitive panel 12 on the console 24 of the first conference room 10. If it is determined that the real time picture should be displayed as represented by a NO at decision step 101, then the processing proceeds to step 102. In step 102, the video signals from the video cameras, etc., are compressed and transmitted through the telephone network line 1 from the first and second conference rooms 10, 30 one another so that the picture of such video signal is displayed on the television monitors 18, 38 of the first and second conference rooms 10, 30.

If the previously-prepared picture is displayed as represented by a YES at decision step 101, then the processing proceeds to the next decision step 103. It is determined in decision step 103 by the system controller 11 of the first conference room 10 whether or not the simple commander 13 on the console 24 is operated. If the forward key 13a or backward key 13b of the simple commander 13 on the console 24 is operated as represented by a YES at decision step 103, then the processing proceeds to step 104, whereat scenario code data representative of the number (No. 1 in the beginning regardless of the direction) that was incremented in the direction corresponding to the operated key is transmitted to the system controller 31 of the second conference room 30 from the system controller 11 through the telephone network line 1. When the scenario code data is received by the system controller 31 of the second conference room 30, data of the corresponding code number stored in the scenario storage memory 34 connected to the system controller 31 is read out from the memory 34 in step 105. Then, an instruction signal is supplied from the system controller 31 to the video equipment (on the second conference room 30 side) represented by the read-out data so that the video equipment outputs the recorded video signal, i.e., a picture of a picture code (document code, frame code, index code) represented by the data thus read out is output in step 106. This output picture is displayed on the television monitor 38 in the second conference room 30. When data are stored in the memory 14 in the sequential order shown in FIG. 4, for example, if the scenario code 1 is designated, then data of the document code 1 is read out by the magneto-optical disc apparatus 23 and then displayed.

Insofar as the picture display mode is not changed-over, scenario code data of the code number incremented in the direction corresponding to the operated key is transmitted each time the forward key 13a or backward key 13b of the simple commander 13 in the first conference room 10 is operated and then the display of the picture is changed-over in accordance with the scenario.

Though not shown in the flowchart of FIG. 6, when the scenario code data is transmitted to the system controller 31 from the system controller 11 in the first conference room 10, data of the corresponding code number stored in the scenario storage memory 14 also is read out to the system controller 11 and the picture of the corresponding code of the equipment represented by that data is output. Then, this picture is displayed on the respective television monitors 18 in the first conference room 10. The picture displayed on the respective television monitors 18 in the first conference room 10 and the picture displayed on the respective television monitors 38 in the second conference room 30 become the same accordingly.

Since the previously-prepared picture is simultaneously displayed in the two conference rooms 10, 30 as described above, the presentation can be simultaneously offered to those who attend the conference in the two conference rooms 10 and 30. The picture to be displayed is not compressed (or compressed with a small compression ratio) and then transmitted during a long period of time so that a clear picture having a high resolution can be displayed. If a resolution of a still picture is high particularly when a still picture such as a document on which characters or the like is written is displayed, then the content of the document can be understood with ease, which can make the conference progress smoothly. Further, during the conference, those present are required to operate only the forward key 13a or backward key 13b of the simple commander 13 on the console 24, which is very simple and easy. Therefore, the person present who makes the presentation can operate the forward key 13a or backward key 13b with ease during the conference and the expert is not needed.

Although all pictures are transmitted in advance as described above, if the moving picture such as a picture played back from the VTR, for example, is not compressed and transmitted, then a data amount is considerably increased and the transmission time is increased accordingly. Therefore, a moving picture that does not need a high resolution may be transmitted in a real time fashion even in the previously-prepared picture display mode. In this case, data representing that the picture of the corresponding scenario code is a signal transmitted in a real time fashion is stored in the scenario storage memory.

While pictures are sequentially displayed in accordance with the scenario as described above, pictures may be displayed in the order different from the order of the scenario code. In that case, pictures can be displayed in the different order by pressing the forward key 13a or backward key 13b of the simple commander 13 a plurality of times until a picture of the corresponding scenario code is displayed. Alternatively, by operating the touch-sensitive panel 12, the scenario code may be directly designated to display a corresponding picture. Furthermore, a ten-key that can directly designate the scenario code is provided on the simple commander so that pictures to be displayed may be selected in an arbitrary order by operating the simple commander.

While the same picture is displayed on the television monitors 18 and 30 in both the first and second conference rooms 10 and 30 as described above, a picture may be displayed only on the television monitors 18 of the first conference room 10 in accordance with the set scenario by the operation on the console 24 in the first conference room 10. In that case, only the scenario code data must be stored in the scenario storage memory in advance and the scenario code data need not be transmitted in advance to the other conference room via the telephone network line.

Conversely, if the same control data or the like is transmitted from the first conference room 10 to two conference rooms or more, then the presentation based on the scenario can be made in three conference rooms or more.

While only the transmission of the pictures from the video equipments is controlled in accordance with the scenario as described above, other control operations may be effected. When a television monitor of the type such that a picture is projected onto a picture screen by a projector is utilized, for example, data that controls an illumination apparatus is added to image data or document data as scenario data stored in the scenario memory and an illumination amount of the conference room is automatically reduced based on the added control data because the illumination amount of the conference room must be reduced when a picture is projected on the picture screen by the above projector.

While only the display of pictures has been described so far, the present invention is not limited thereto and such a variant thereof is also possible. That is, the displayed picture may be printed out as a hard copy or some data may be written in the displayed picture. At that time, the above modification may be effected either in a centralized control fashion wherein all conference rooms are controlled only by the console 24 of the first conference room 10 that controls the transmission of video signals or in a manner that conference rooms are controlled individually by utilizing consoles of respective conference rooms. When all conference rooms are controlled in a centralized control fashion, control data (data written in picture, etc.) representative of the centralized control operation must be transmitted via the telephone network line 1.

While data transmission is effected among a plurality of conference rooms via the telephone network line as described above, the present invention is not limited thereto and may be applied to the case such that data is transmitted by means of other communication systems such as a variety of radio communications (ground system communication by radio waves, satellite communication, communication via an infrared signal, etc.).

Furthermore, while the present invention is applied to the electronic teleconference system based on communication among the conference rooms as described above, the present invention is not limited thereto and pictures displayed in other places than the conference room can be similarly controlled by utilizing the telephone network line or the like.

According to the present invention, the pictures such as the previously-prepared documents or the like can be sequentially displayed at positions away from each other only by switching the display. Also, the pictures such as the previously-prepared documents can be displayed with ease at the position side in which the switching operation is carried out.

Having described a preferred embodiment of the invention with reference to the accompanying drawings, it is to be understood that the invention is not limited to that precise embodiment and that various changes and modifications could be effected therein by one skilled in the art without departing from the scope of the invention as defined in the appended claims.

## Claims

1. A teleconference system comprising a video transmitting apparatus (10) and a video receiving apparatus (30) between which a video signal is transmitted, said video receiving apparatus (30) comprising:
a) display means (38) for displaying a video information;
b) video memory means (35, 40, 43) for storing therein a plurality of items of video information transmitted from said video transmitting apparatus (10); characterised by:-
c) control information memory means (34) for storing therein display control information representative of an order in which said plurality of items of video information transmitted from said video transmitting apparatus (10) and stored in said video memory means (35, 40, 43) are to be displayed so as to form a desired scenario; and
d) control means (31) responsive to a display switching information transmitted from said video transmitting apparatus (10) to read said display control information stored in said control information memory means (34) and sequentially reading said video information from said video memory means (35, 40, 43) in accordance with the display order represented by the read-out display control information and supplying the same to said display means (38) whereby subsequent items of video information are used to form subsequent images on said display in accordance with said desired scenario.

2. The teleconference system according to claim 1, wherein said video transmitting apparatus (10) includes second video memory means (15, 20, 23) for storing video information, information generating means (13) for generating said display control information, and switching means (12) for generating data representative of scenario code which increments in the direction corresponding to a key operated each time a forward key or backward key is operated as said display switching information.

3. A teleconference system according to claim 2 wherein the video transmitting apparatus (10) is constituted by a first video transmitting and receiving apparatus and the video receiving apparatus (30) is constituted by a second video transmitting and receiving apparatus, each of said first and second video transmitting and receiving apparatus comprising:
a said display means (18, 38) for displaying video information;
a said video memory means (15, 20, 23; 35, 40, 43);
a said information generating means (13, 33);
a said control information memory means (14, 34);
a said switching means (12, 32) for generating data representative of scenario code; and
a said control means (11, 31) responsive to said display switching information supplied from said switching means (12, 32) to read said display control information from said control information memory means (14, 34) and sequentially reading said video information from said video memory means (15, 20, 23; 35, 40, 43) in accordance with the display order represented by the read-out display control information and supplying the same to said display means (18; 38).

4. The teleconference system according to claim 1, 2 or 3, wherein said video memory means (15, 20, 23; 35, 40, 43) is a magneto-optical disc apparatus.

5. A terminal system for use in a teleconference system according to any one of the preceding claims, the terminal system comprising a said display means (18, 38),
a said video memory means (15, 20, 23; 35, 40, 43);
a said information generating means (13; 33);
a said control information memory means (14; 34);
a said switching means (12; 32); and
a said control means (11; 31).

## Patentansprüche

1. Telekonferenzsystem mit einer Videosendevorrichtung (10) und einer Videoempfangsvorrichtung (30), zwischen denen ein Videosignal übertragen wird, wobei die Videoempfangsvorrichtung (30) aufweist:
a) eine Anzeigeeinrichtung (38) zur Anzeige einer Videoinformation;
b) einen Videospeicher (35, 40, 43), um mehrere Videoinformationsbeiträge zu speichern, die von der Videosendevorrichtung (10) übertragen wurden;
**gekennzeichnet durch**
c) einen Steuerinformationsspeicher (34) zum Speichern einer Anzeigeinformation, die eine Reihenfolge darstellt, in welcher die mehreren Videoinformationsbeiträge, die vom Videosendegerät (10) übertragen und im Videospeicher (34, 50, 43) gespeichert wurden, anzuzeigen sind, um somit ein gewünschtes Drehbuch zu bilden; und
d) eine Steuerung (31), die auf eine Anzeigeumschaltinformation anspricht, die von der Videosendevorrichtung (10) übertragen wurde, um die Anzeigesteuerinformation zu lesen, die im Steuerinformationsspeicher (34) gespeichert ist, und um nacheinander die Videoinformation aus dem Videospeicher (35, 40, 43) gemäß der Anzeigereihenfolge zu lesen, die durch die Leseanzeigesteuerinformation dargestellt wird, und um diese zur Anzeigeeinrichtung (38) zu liefern, wodurch aufeinanderfolgende Videoinformationsbeiträge dazu verwendet werden, aufeinanderfolgende Abbilder auf der Anzeige gemäß dem gewünschten Drehbuch zu bilden.

2. Telekonferenzsystem nach Anspruch 1, wobei die Videosendevorrichtung (10) einen zweiten Videospeicher (15, 20, 23) besitzt, um eine Videoinformation zu speichern, eine Informationserzeugungseinrichtung (13), um die Anzeigesteuerinformation zu erzeugen, und eine Umschalteinrichtung (12), um Daten zu erzeugen, die für einen Drehbuchcode, der in der Richtung entsprechend einer betätigten Taste zunimmt, jedesmal, wenn eine Vorwärtstaste oder eine Rückwärtstaste betätigt wird, als Anzeigeumschaltinformation repräsentativ sind.

3. Telekonferenzsystem nach Anspruch 2, wobei die Videosendevorrichtung (10) aus einer ersten Videosende- und Empfangsvorrichtung besteht, und die Videoempfangsvorrichtung (30) aus einer zweiten Videosende- und Empfangsvorrichtung besteht, wobei ein jede der ersten und zweiten Videosende- und Empfangsvorrichtungen umfaßt:
die Anzeigeeinrichtung (18, 38) zur Anzeige einer Videoinformation;
den Videospeicher (15, 20, 23; 35, 40, 43);
die Informationserzeugungseinrichtung (13, 33);
den Steuerinformationsspeicher (14, 34);
die Umschalteinrichtung (12, 32) zur Erzeugung von Daten, die einen Drehbuchcode darstellen; und
die Steuerung (11, 31), die auf die Anzeigeumschaltinformation anspricht, die von der Umschalteinrichtung (12, 32) geliefert wird, um die Anzeigesteuerinformation aus dem Steuerinformationsspeicher (14, 34) zu lesen und um nacheinander die Videoinformation aus dem Videospeicher (15, 20, 23; 35, 40, 43) gemäß der Anzeigereihenfolge zu lesen, die durch die Leseanzeigesteuerinformation dargestellt wird, und um diese zur Anzeigeeinrichtung (18; 38) zu liefern.

4. Telekonferenzsystem nach Anspruch 1, 2 oder 3, wobei der Videospeicher (15, 20, 23; 35, 40, 43) ein magneto-optisches Plattengerät ist.

5. Endgerätesystem zur Verwendung bei einem Telekonferenzsystem nach einem der vorhergehenden Ansprüche, wobei das Endgerätesystem umfaßt:
die Anzeigeeinrichtung (18, 38),
den Videospeicher (15, 20, 23; 35, 40, 43);
die Informationserzeugungseinrichtung (13; 33);
den Steuerinformationsspeicher (14; 34);
die Umschalteinrichtung (12; 32); und
die Steuerung (11; 31).

## Revendications

1. Système de téléconférence comprenant un appareil d'émission vidéo (10) et un appareil de réception vidéo (30) entre lesquels un signal vidéo est transmis, ledit appareil de réception vidéo (30) comprenant :
(a) un moyen d'affichage (38) pour afficher une information vidéo ;
(b) un moyen de mémoire vidéo (35, 40, 43) pour stocker dedans une pluralité d'éléments d'information vidéo émis depuis ledit appareil d'émission vidéo (10),
caractérisé par :
(c) un moyen de mémoire d'information de commande (34) pour stocker dedans une information de commande d'affichage représentative d'un ordre selon lequel ladite pluralité d'éléments d'information vidéo émis depuis ledit appareil d'émission vidéo (10) et stockés dans ledit moyen de mémoire vidéo (35, 40, 43) doivent être affichés de manière à former un scénario souhaité ; et
(d) un moyen de commande (31) sensible à une information de commutation d'affichage émise depuis ledit appareil d'émission vidéo (10) pour lire ladite information de commande d'affichage stockée dans ledit moyen de mémoire d'information de commande (34) et pour lire séquentiellement ladite information vidéo dans ledit moyen de mémoire vidéo (35, 40, 43) conformément à l'ordre d'affichage représenté par l'information de commande d'affichage lue et pour appliquer celle-ci sur ledit moyen d'affichage (38) de telle sorte que des éléments successifs d'information vidéo soient utilisés pour former des images successives sur ledit affichage conformément audit scénario souhaité.

2. Système de téléconférence selon la revendication 1, dans lequel ledit appareil d'émission vidéo (10) inclut un second moyen de mémoire vidéo (15, 20, 23) pour stocker une information vidéo, un moyen de génération d'information (13) pour générer ladite information de commande d'affichage et un moyen de commutation (12) pour générer des données représentatives d'un code de scénario qui s'incrémente suivant le sens correspondant à une touche activée chaque fois qu'une touche vers l'avant ou une touche vers l'arrière est activée en tant que dite information de commutation d'affichage.

3. Système de téléconférence selon la revendication 2, dans lequel l'appareil d'émission vidéo (10) est constitué par un premier appareil d'émission et de réception vidéo et l'appareil de réception vidéo (30) est constitué par un second appareil d'émission et de réception vidéo, chacun desdits premier et second appareils d'émission et de réception vidéo comprenant :
un dit moyen d'affichage (18, 38) pour afficher une information vidéo ;
un dit moyen de mémoire vidéo (15, 20, 23 ; 35, 40, 43) ;
un dit moyen de génération d'information (13, 33) ;
un dit moyen de mémoire d'information de commande (14, 34) ;
un dit moyen de commutation (12, 32) pour générer des données représentatives d'un code de scénario ; et
un dit moyen de commande (11, 31) sensible à ladite information de commutation d'affichage appliquée depuis ledit moyen de commutation (12, 32) pour lire ladite information de commande d'affichage dans ledit moyen de mémoire d'information de commande (14, 34) et pour lire séquentiellement ladite information vidéo dans ledit moyen de mémoire vidéo (15, 20, 23 ; 35, 40, 43) conformément à l'ordre d'affichage représenté par l'information de commande d'affichage lue et pour appliquer celle-ci sur ledit moyen d'affichage (18 ; 38).

4. Système de téléconférence selon la revendication 1, 2 ou 3, dans lequel ledit moyen de mémoire vidéo (15, 20, 23 ; 35, 40, 43) est un appareil à disque magnéto-optique.

5. Système de terminal pour une utilisation dans un système de téléconférence selon l'une quelconque des revendications précédentes, le système de terminal comprenant :
un dit moyen d'affichage (18, 38) ;
un dit moyen de mémoire vidéo (15, 20, 23 ; 35, 40, 43) ;
un dit moyen de génération d'information (13, 33) ;
un dit moyen de mémoire d'information de commande (14, 34) ;
un dit moyen de commutation (12, 32) ; et
un dit moyen de commande (11, 31).
